# EUROPÄISCHE PATENTSCHRIFT

(11) **EP 0 476 550 B1**
(45) Veröffentlichungstag und Bekanntmachung des Hinweises auf die Patenterteilung: **01.02.1995**
(21) Anmeldenummer: 91115614.9
(22) Anmeldetag: 14.09.1991
(51) Int. Cl.: C05G 3/00, A01C 21/00

(54) **Bodenzusatzmittelkugel zur Versorgung von Pflanzen mit Stickstoff und Verfahren zur Herstellung**
Soil additive pellets, to feed plants with nitrogen, and process for their production
Billes d'additif pour le sol, pour l'alimentation des plantes en azote, et procédé pour les fabriquer

(30) Priorität: 20.09.1990 DE 4029736
(43) Veröffentlichungstag der Anmeldung: 25.03.1992
(73) Patentinhaber: ProMineral Gesellschaft zur Verwendung von Mineralstoffen mbH, 45141 Essen (DE)
(72) Erfinder: Sommer, Karl, Prof. Dr., W-5300 Bonn 1 (DE)
(74) Vertreter: Andrejewski, Walter

(56) Entgegenhaltungen:
- DE-A- 1 945 108
- DE-A- 2 608 858
- DE-A- 3 742 328
- DE-A- 3 744 732
- DE-A- 3 827 179
- DE-B- 1 592 812
- DE-C- 3 835 526
- FR-A- 2 063 048
- US-A- 3 441 400

## Beschreibung

Die Erfindung betrifft eine Bodenzusatzmittelkugel zur nitratfreien Stickstoffversorgung von Pflanzen. Die Erfindung betrifft auch verfahren zur Herstellung solcher Formkörper.

Die aus der Praxis bekannten Bodenzusatzmittel, von denen die Erfindung ausgeht, sind Stickstoffdüngerkörner, die aus dem Stickstoffdünger selbst bestehen. Stickstoffdünger bezeichnet Stickstoffträger wie Harnstoff, Ammoniumsulfat, Ammoniumchlorid, Mono- und Di-Ammoniumphosphat, Ammoniumnitrat sowie organische Stickstoffdünger in der Ammoniumform und dergleichen. Im Rahmen der bekannten Maßnahmen sind die Löslichkeit der Stickstoffdünger im Boden, der Diffusionsbereich des Stickstoffs im Boden sowie die Abhängigkeit dieser Größen von der Zeit und von Umweltbedingungen im Boden praktisch nicht steuerbar. Zwar ist rein mengenmäßig und durch gleichsam in Portionen aufgeteilte Zugabe eine Dosierung der Stickstoffversorgung der Pflanzen möglich, nicht jedoch eine in bezug auf die vorstehend angegebenen Größen gesteuerte Dosierung.

Insgesamt läßt sich die heutige Situation auf dem Gebiet der Versorgung von Pflanzen mit Stickstoff wie folgt zusammenfassen:
Aus ökologischen und gesundheitlichen Gründen ist es im Pflanzenbau erforderlich, die Nitratgehalte in Pflanzen möglichst niedrig zu halten, Nitratverlagerungen ins Grundwasser und seinen Eintrag in Oberflächengewässer zu verhindern, die Anwendung von Wirkstoffen im Pflanzenschutz (Herbizide, Fungizide, Insektizide, etc.) einzuschränken und zum Bodenschutz den Bodenabtrag durch Erosion weitgehend zu unterbinden. Ferner ist es aus ökonomischen Gründen erstrebenswert, als Mineraldünger verabreichten Stickstoff durch die Pflanzen optimal auszunutzen und die Anwendungstechnik der Stickstoffdüngung von mehrfach geteilten Gaben auf eine pro Vegetationsperiode zu vermindern, und zwar bei exakter Bemessung der Höhe der Versorgung nach dem Bedarf der Pflanzen. Diese Ziele zu erreichen ist bei üblicher Art der Stickstoffdüngung nur sehr begrenzt möglich, da Stickstoffdünger nicht nur breitwürfig über die Flächen verteilt, sondern aufgrund mikrobieller Aktivitäten im Boden auch weitgehend in Nitrat umgewandelt werden. Da Nitrat im Gegensatz zum Ammonium im Boden nicht nur leicht mobil sondern als Stickstofform auch instabil ist, wird es in Abhängigkeit von Witterungsverläufen nicht nur ins Grundwasser verlagert, sondern durch Drainwässer auch in Oberflächengewässer eingetragen oder im Boden denitrifiziert und als NOₓ an die Atmosphäre abgegeben. Ferner ist Nitrat aufgrund seiner Mobilität im Boden nicht gezielt zu einer Kultur anwendbar. Es steht nicht nur allen Pflanzen - Kulturpflanzen wie Unkräutern -, sondern auch allen Bodenorganismen in gleicher Weise als Stickstoffquelle zur Verfügung. Eine gezielte Düngung der Kulturpflanzen ist daher mit üblichen Düngungsverfahren nur sehr begrenzt möglich mit der Folge, daß Unkräuter und alle Bodenorganismen von der Stickstoffdüngung in gleicher Weise wie die Kulturpflanzen profitieren. Dieses hat nicht nur erhebliches und intensives Wachstum des Unkrauts und den umfangreichen Einsatz von Herbiziden zu deren Bekämpfung zur Folge, sondern auch die Notwendigkeit, Pflanzenbau im Bereich der Nettomineralisation der organischen Masse im Boden betreiben zu müssen. Dadurch wird der Boden nicht nur von Ernterückständen wie Stroh, Stoppeln, Wurzelrückständen oder sonstigem Bestandsabfall mit weitem C/N-Verhältnis entblößt und dadurch verstärkt durch Erosionsvorgänge gefährdet, sondern Bodentieren, wie z. B. den Regenwürmern, wird eine wesentliche Nahrungsquelle entzogen. Ihre Vermehrung wird zwangsläufig erheblich eingeschränkt. Die Tiefenporung der Böden wird in Mitleidenschaft gezogen mit der Folge von Bodenvernässungen nach Niederschlägen. Ferner können auch Überhänge an mineralisiertem Stickstoff in der vegetationslosen Zeit nicht mehr durch biologische N-Fixierung vor Auswaschungen bewahrt werden.

Grundsätzlich ist es zur Düngung von Pflanzen bekannt (DE-A 26 08 858), dem Boden stückige Wirkstoffspender zuzumischen oder stückige Wirkstoffspender als Schicht auf den Boden aufzubringen. Die stückigen Wirkstoffspender bestehen aus Blähton oder Blähschiefer und sind mit dem Düngemittel imprägniert. Im übrigen ist es bekannt (FR-A 20 63 048), Granulatkörner aus Bimsstein oder dergleichen mit einer Düngemittellösung zu tränken, wobei auch Stickstoffverbindungen eingesetzt werden. Die Granulatkörner werden danach mit einer Umhüllung versehen.

Demgegenüber liegt der Erfindung die Aufgabe zugrunde, ein stückiges Bodenzusatzmittel zur nitratfreien Stickstoffversorgung von Pflanzen anzugeben, welches eine gesteuerte Versorgung der Pflanzen mit Stickstoff ermöglicht.

Zur Lösung dieser Aufgabe ist Gegenstand der Erfindung ein Bodenzusatzmittel zur nitratfreien Stickstoffversorgung von Pflanzen mit den Merkmalen:
1.1) Die Bodenzusatzmittelkugel besteht aus Gips, Durchmesserbereich von 15 bis 80 mm,
1.2) in die Bodenzusatzmittelkugel ist eine körnige Substanz der Gruppe "Ammoniumsulfat, Ammoniumchlorid, Ammoniumphosphat, Ammonium/Magnesium-Phosphat" oder Mischungen davon, gegebenenfalls mit Beimischung von Harnstoff, eingebaut,
1.3) die Substanzen gemäß 1.2) sind so gestaltet, daß sie nach Verbrauch durch die Pflanzen in der Bodenzusatzmittelkugel offene Poren der Größe von 0,1 bis 0,5 mm bilden,
wobei die Masse der Substanzen gemäß 1.2) so gewählt ist, daß die Bodenzusatzmittelkugel nach Verbrauch der Substanzen ein Porenvolumen von 50 bis 75 % aufweist. Das bedeutet umgekehrt, daß volumenmäßig in diesem Umfang die Stickstoffdüngerkörner eingebaut werden können. Nach bevorzugter Ausführungsform der Erfindung weist die Bodenzusatzmittelkugel einen Stickstoffgehalt von 0,5 bis 10,0 g Stickstoff auf. Wasserführende Substanzen aus der Gruppe "Hygromull, Hydrogele" oder Mischungen können zugegeben werden. Gips bezeichnet im Rahmen der Erfindung sowohl Dihydrate als auch Halbhydrate.

Im Rahmen der Erfindung liegt es, dem Gemenge mikrobiell zersetzliche Substanzen bei zugeben. Als Spezialdünger mit sehr exakter Steuerbarkeit der Verfügbarkeit des in den Bodenzusatzmittelkugeln enthaltenen Stickstoffs für die Pflanzen entsprechend ihrer Wachstumsintensität und entsprechend der Dauer der Kulturen, empfiehlt die Erfindung, nach Maßgabe der Zweckbestimmung dem Gemenge Substanzen der Gruppe "Nitrifikationshemmer, Ureasehemmer, Wachstumsregulatoren, systemische Pflanzenschutzmittel, Selektivherbizide" oder Mischungen dieser Substanzen beizugeben. Die Bodenzusatzmittelkugeln können Umhüllungen aufweisen, die eine Stabilisierung bewirken und auch so eingestellt werden können, daß die Bodenzusatzmittelkugeln erst nach einer vorgegebenen Zeit in der angegebenen Weise im Boden wirksam werden.

Die erfindungsgemäßen Bodenzusatzmittelkugeln sind sehr einfach herstellbar. Zur Herstellung hat sich ein Verfahren bewährt, welches dadurch gekennzeichnet ist, daß ein Gemisch aus den Stickstoffdüngerkörnern, gegebenenfalls Zusatzstoffen, sowie Gips mit ausreichend Wasser hergestellt und daraus die Bodenzusatzmittelkugeln als Aufbaukugeln gerollt werden. Fernerhin hat sich ein Verfahren bewährt, welches dadurch gekennzeichnet ist, daß zunächst ein Gemisch aus den Stickstoffdüngerkörnern, gegebenenfalls Zusatzstoffen, sowie Gips mit ausreichend Wasser hergestellt und daraus die Bodenzusatzmittelkugeln gepreßt werden.

Die erreichten Vorteile sind darin zu sehen, daß bei Verwendung erfindungsgemäßer Bodenzusatzmittelkugeln die Pflanzen während ihrer gesamten Vegetationszeit entsprechend ihrer Wachstumsintensität mit einem Stickstoffdüngemittel unter ökologisch und ökonomisch sehr günstigen Voraussetzungen nitratfrei versorgt werden können. Die Stickstoffdüngung der Pflanzen kann bei Verwendung der erfindungsgemäßen Bodenzusatzmittelkugeln auf ihren tatsächlichen Entzug beschränkt werden. Eine Unkrautbekämpfung kann im wesentlichen auf der Basis gezielten Stickstoffmangels durchgeführt werden. Ernterückstände können im Rahmen weiter C/N-Verhältnisse den Regenwürmern als Nahrungsquelle erhalten werden, während andererseits der Boden durch unzersetzte Ernterückstände vor Erosionsvorgängen geschützt werden kann. Es versteht sich, daß auch Spurenelemente und Wirkstoffe zum Pflanzenschutz den Bodenzusatzmittelkugeln beigegeben werden können.

Stückige Bodenzusatzmittel zur Beeinflussung des Wachstums von Pflanzen sind an sich bekannt (vgl. DE 38 35 526 C1, DE 38 27 179 A1, DE 37 42 328 A1, DE-OS 19 45 108), und zwar auch in Form von Bodenzusatzmittelkugeln, jedoch anderen Aufbaus und anderer Funktion. Erfindungsgemäß diffundiert der Stickstoff aus dem Inneren der Bodenzusatzmittelkugeln an deren Oberfläche. Aufgrund der mit der Zeit zunehmenden Porosität der Bodenzusatzmittelkugeln durch Verbrauch des Stickstoffdüngers wird der Stickstoff von den Wurzeln der Pflanzen gleichsam erwachsen, wobei die Wurzeln in die Bodenzusatzmittelkugeln eindringen. Die Pflanzen werden mit ihren Wurzeln an die Oberfläche der Bodenzusatzmittelkugeln herangezogen. Sie umgeben diese schon nach relativ kurzer Zeit mit einem dichten Wurzelgeflecht und schließen so weitere Pflanzen sowie Nitrifikanten von der Verwertung der Stickstoffquelle aus. Die Bodenzusatzmittelkugeln bilden auf diese Weise erfindungsgemäß eine Stickstoffquelle, die sehr weitgehend vor jedem Stickstoffverlust geschützt ist. Die Pflanzen regulieren den Umfang ihrer Stickstoffaufnahme in Abhängigkeit von ihrer Wachstumsintensität. Der Gips als Matrixbildner der Bodenzusatzmittelkugeln wird entweder von den Pflanzen als Nährstoff zur Schwefel- oder Calciumversorgung aufgenommen oder bei der anschließenden Bodenbearbeitung aufgrund der Porosität, die sich inzwischen eingestellt hat, fein verteilt und mit dem Boden vermischt. Er steht so nachfolgenden Kulturen zur Nährstoffversorgung zur Verfügung.

### Ausführungsbeispiele

### Beispiel 1

25,0 %_{Gew.} granulierter Harnstoff, 24,8 %_{Gew.} NH₄H₂PO₄, 0,2 %_{Gew.} Dicyandiamid, 45,0 %_{Gew.} Gips und 5,0 % Rohbraunkohle werden miteinander vermischt und zu Bodenzusatzmittelkugeln mit 1,0 bis 10,0 g Stickstoff verarbeitet. Diese Bodenzusatzmittelkugeln werden beim Setzen der Pflanzen oder der Ablage des Saatgutes etwa 5,0 cm unter deren Pflanzteile oder in der Reihe zwischen jeweils zwei Pflanzen abgelegt. Bei stehenden Kulturen erfolgt die Ablage der Bodenzusatzmittelkugeln etwa 10 bis 15 cm neben die Pflanzen etwa 10,0 cm tief in den Boden, bei Baum- oder Strauchkulturen im Grenzbereich der Ausdehnung ihrer Wurzelsysteme.

### Beispiel 2

25,0 %_{Gew.} granulierter Harnstoff, 24,8 %_{Gew.}NH₄H₂PO₄, 0,2 %_{Gew.} Dicyandiamid, 25,0 %_{Gew.} Gips und 25,0 %_{Gew.} Koalinit werden miteinander vermischt und zu Bodenzusatzmittelkugeln mit 1,0 bis 10,0 g Stickstoff verarbeitet. Die Anwendung erfolgt wie unter (1).

### Beispiel 3

50,0 %_{Gew.} granulierter Harnstoff, 24,8 %_{Gew.}NH₄H₂PO₄, 0,2 %_{Gew.} Dicyandiamid und 25,0 %_{Gew.} Gips werden miteinander vermischt und zu Bodenzusatzmittelkugeln mit 1,0 bis 10,0 g Stickstoff verarbeitet. Die Anwendung erfolgt wie unter (1).

### Beispiel 4

50,0 %_{Gew.} granulierter Harnstoff, 24,8 %_{Gew.} NH₄H₂PO₄, 0,2 %_{Gew.} Dicyandiamid und 25,0 %_{Gew.} Gips werden miteinander vermischt und zu Bodenzusatzmittelkugeln mit 1,0 bis 10,0 g Stickstoff verarbeitet. Anschließend werden diese Bodenzusatzmittelkugeln nach der Trocknung unter Unterdruck mit einer Rapsöl-/Tonsuspension imprägniert. Die Anwendung erfolgt wie unter (1).

### Beispiel 5

50,0 %_{Gew.} granulierter Harnstoff, 24,8 %_{Gew.}NH₄H₂PO₄, 0,2 %_{Gew.} Dicyandiamid und 25,0 %_{Gew.} Gips werden miteinander vermischt und zu Bodenzusatzmittelkugeln mit 1,0 bis 10,0 g Stickstoff verarbeitet. Anschließend wird auf diese Bodenzusatzmittelkugeln eine Schicht von ca. 1,0 bis 2,0 mm Kohlenhydrat-/Mineralstoff-/Gipsgemisch aufgetragen. Die Anwendung erfolgt wie unter (1).

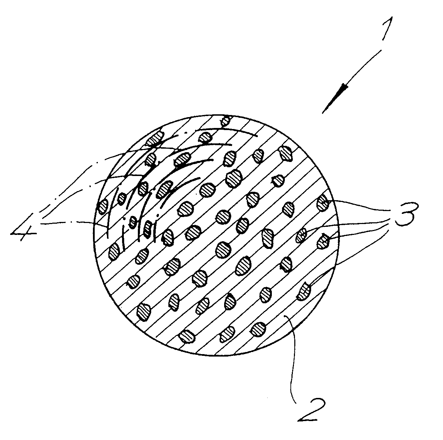

Die einzige Figur zeigt einen Querschnitt durch eine erfindungsgemäße Bodenzusatzmittelkugel, und zwar im Querschnitt. Man erkennt die Matrix 2, die aus Gips besteht, und eingebettet den Stickstoffdünger 3. Die Kugel kann gepreßt sein. Sie kann auch als Aufbaukugel gerollt sein, wobei Schichten entstehen, die in einem Teil der Figur durch strichpunktierte Linien 4 angedeutet sind.

## Patentansprüche

1. Bodenzusatzmittelkugel zur nitratfreien Stickstoffversorgung von Pflanzen mit den Merkmalen:
1.1) die Bodenzusatzmittelkugel besteht aus Gips, Durchmesserbereich von 15 bis 80 mm,
1.2) in die Bodenzusatzmittelkugel ist eine körnige Substanz der Gruppe "Ammoniumsulfat, Ammoniumchlorid, Ammoniumphosphat, Ammonium/Magnesium-Phosphate" oder Mischungen davon, gegebenenfalls mit Beimischung von Harnstoff, eingebaut,
1.3) die Substanzen gemaß 1.2) sind so gestaltet, daß sie nach Verbrauch durch die Pflanzen in der Bodenzusatzmittelkugel offene Poren der Größe von 0,1 bis 0,5 mm bilden,
wobei die Masse der Substanzen gemäß 1.2) so gewählt ist, daß die Bodenzusatzmittelkugel nach Verbrauch der Substanzen ein Porenvolumen von 50 bis 75 % aufweist.

2. Bodenzusatzmittelkugel nach Anspruch 1, wobei die Formkörper einen Stickstoffgehalt von 0,5 bis 10,0 g Stickstoff aufweisen.

3. Bodenzusatzmittelkugel nach einem der Ansprüche 1 oder 2, wobei wasserführende Substanzen aus der Gruppe "Hygromull, Hydrogele" oder Mischungen davon zugegeben sind.

4. Bodenzusatzmittelkugel nach einem der Ansprüche 1 bis 3, wobei mikrobiell zersetzliche Substanzen beigegeben sind.

5. Bodenzusatzmittelkugel nach einem der Ansprüche 1 bis 4, wobei Substanzen der Gruppe "Nitrifikationshemmer, Ureasehemmer, Wachstumsregulatoren, systemische Pflanzenschutzmittel, Selektivherbizide" oder Mischungen davon beigemischt sind.

6. Bodenzusatzmittelkugel nach einem der Ansprüche 1 bis 5, die eine Umhüllung aufweist, welche aus Gips und zumindest einer darin eingebetteten, mikrobiell zersetzlichen organischen Substanz besteht.

7. Bodenzusatzmittelkugel nach einem der Ansprüche 1 bis 6, die eine Imprägnierung mit Pflanzenölen und/oder Pflanzenfetten aufweist.

8. Verfahren zur Herstellung von Bodenzusatzmittelkugeln nach einem der Ansprüche 1 bis 7, dadurch gekennzeichnet, daß ein Gemisch aus den Stickstoffdüngerkörnern, gegebenenfalls den Zusatzstoffen, sowie Gips mit ausreichend Wasser hergestellt und daraus die Bodenzusatzmittelkugeln als Aufbaukugeln gerollt werden.

9. Verfahren zur Herstellung von Bodenzusatzmittelkugeln nach einem der Ansprüche 1 bis 7, dadurch gekennzeichnet, daß zunächst ein Gemisch aus den Stickstoffdüngerkörnern, gegebenenfalls Zusatzstoffen, sowie Gips mit ausreichend Wasser hergestellt und daraus die Bodenzusatzmittelkugeln gepreßt werden.

## Claims

1. A soil additive ball for the nitrate-free supply of nitrogen to plants, having the following features:
1.1) the soil additive ball consists of gypsum, and has a diameter range of 15 to 80 mm,
1.2) a granular substance from the group comprising ammonium sulphate, ammonium chloride, ammonium phosphate, ammonium/magnesium phosphates or mixtures thereof, optionally with the admixture of urea, is incorporated in the soil additive ball,
1.3) the substances according to 1.2) are arranged so that after consumption by the plants they form open pores of size 0.1 to 0.5 mm in the soil additive ball,
wherein the weight of the substances according to 1.2) is selected so that after the consumption of the substances the soil additive ball has a pore volume of 50 to 75%.

2. A soil additive ball according to claim 1, wherein the shaped bodies have a nitrogen content of 0.5 to 10.0 g nitrogen.

3. A soil additive ball according to either one of claims 1 or 2, wherein water-bearing substances from the group comprising moist peat or hydrogels or mixtures thereof are added.

4. A soil additive ball according to any one of claims 1 to 3, wherein microbially degradable substances are also added.

5. A soil additive ball according to any one of claims 1 to 4, wherein substances of the group comprising nitrification inhibitor, urease inhibitors, growth regulators, systemic plant protection media, selective herbicides or mixtures thereof are admixed.

6. A soil additive ball according to any one of claims 1 to 5, which has a coating which consists of gypsum and at least one microbially degradable organic substance embedded therein.

7. A soil additive ball according to any one of claims 1 to 6, which is impregnated with vegetable oils and/or vegetable fats.

8. A method of producing soil additive balls according to any one of claims 1 to 7, characterised in that a mixture comprising the nitrogen fertiliser grains, optionally the additive substances, and gypsum is prepared with sufficient water and the soil additive balls are rolled from this mixture as accretive balls.

9. A method of producing soil additive balls according to any one of claims 1 to 7, characterised in that a mixture comprising the nitrogen fertiliser grains, optionally the additive substances, and gypsum is prepared with sufficient water and the soil additive balls are pressed from this mixture.

## Revendications

1. Granule d'adjuvant pour le sol, destiné à la fertilisaton azotée de plantes sans apport en nitrate, ayant les caractéristiques suivantes :
1.1) le granule d'adjuvant pour le sol est constitué par du gypse, ayant un diamètre compris dans la gamme allant de 15 à 80 mm,
1.2) dans le granule d'adjuvant pour le sol est incorporée une substance granulaire du groupe "sulfate d'ammonium, chlorure d'ammonium, phosphate d'ammonium, phosphate d'ammonium/magnésium" ou leurs mélanges, éventuellement en mélange avec de l'urée,
1.3) les substances selon 1.2) sont conçues de telle façon qu'après absorption par les plantes elles forment, dans le granule d'adjuvant pour le sol, des pores ouverts ayant une grosseur de 0,1 à 0,5 mm,
la masse des substances selon 1.2) étant choisie de façon que le granule d'adjuvant pour le sol présente, après absorption des substances, un volume des pores de 50 à 75 %.

2. Granule d'adjuvant pour le sol selon la revendication 1, lequel granule présente une teneur en azote de 0,5 à 10,0 g d'azote.

3. Granule d'adjuvant pour le sol selon la revendication 1 ou 2, auquel on incorpore des substances aquifères du groupe "hygromull, hydrogels" ou leurs mélanges.

4. Granule d'adjuvant pour le sol selon l'une quelconque des revendications 1 à 3, auquel on incorpore des substances dégradables par les microbes.

5. Granule d'adjuvant pour le sol selon l'une quelconque des revendications 1 à 4, auquel on incorpore des substances du groupe "inhibiteur de nitrification, inhibiteur d'uréase, régulateur de croissance, agent phytoprotecteur général, herbicide sélectif" ou leurs mélanges.

6. Granule d'adjuvant pour le sol selon l'une quelconque des revendications 1 à 5, lequel granule présente une enveloppe qui est constituée par du gypse et dans laquelle est incluse au moins une substance organique dégradable par les microbes.

7. Granule d'adjuvant pour le sol selon l'une quelconque des revendications 1 à 6, qui est imprégné avec des huiles végétales et/ou des graisses végétales.

8. Procédé de préparation de granules d'adjuvant pour le sol selon l'une quelconque des revendications 1 à 7, caractérisé en ce que l'on prépare un mélange de granules d'engrais azoté, éventuellement d'adjuvants, ainsi que de gypse, avec une quantité d'eau suffisante, et à partir de celui-ci, on produit les granules d'adjuvant pour le sol sous la forme de granules structurés.

9. Procédé de préparation de granules d'adjuvant pour le sol selon l'une quelconque des revendications 1 à 7, caractérisé en ce que l'on prépare d'abord un mélange de granules d'engrais azoté, éventuellement d'adjuvants, ainsi que de gypse avec une quantité d'eau suffisante, et à partir de celui-ci, on prépare les granules d'adjuvant pour le sol par pressage.
